# EUROPEAN PATENT APPLICATION

(11) **EP 3 944 448 A1**
(43) Date of publication of application: **26.01.2022**
(21) Application number: 21172739.1
(22) Date of filing: 07.05.2021
(51) Int. Cl.: H02J 3/14

(54) **AUTOMATIC LOAD SHEDDING FOR POOR INCOMING POWER QUALITY**

(30) Priority: 23.07.2020 US 202016936849
(71) Applicant: BRUNSWICK CORPORATION, Mettawa, IL 60045 (US)
(72) Inventor: Ledden, John T., Edgewater, FL 32132 (US); Macias, Robert P., Merritt Island, FL 32953 (US)
(74) Representative: Håmsø Patentbyrå AS

(57) **Abstract**

A power system (41) configured to accommodate poor incoming power quality from an outside power source (60). The power system (41) includes an incoming connection (50) configured to receive power from the outside power source (60). A powered device (43) is operatively connected to the incoming connection (50), where the powered device (43) draws a current from the incoming connection (50). A control system (100) detects an incoming voltage at the incoming connection (50) and compares the incoming voltage to a threshold voltage. When the incoming voltage is less than the threshold voltage the current drawn from the incoming connection (50) by the powered device (43) is caused to be reduced. The incoming voltage being less than the threshold voltage is indicative of a poor incoming power quality.

## Description

### FIELD

The present disclosure generally relates to automatic load shedding, and more particularly to automatic load shedding based on identifying poor incoming power quality.

### BACKGROUND

U.S Patent No. 6,652,330 discloses a method for controlling the electrical system of a marine vessel that comprises the steps of measuring a battery potential, comparing the battery potential to a threshold voltage magnitude, and then disconnecting one or more of a plurality of electrical power consuming devices when the voltage potential is less than the threshold voltage magnitude. This is done to avoid the deleterious condition wherein an engine of the marine vessel is operating at idle speed and attempting to charge the battery while a plurality of electrical power consuming devices are operating and drawing sufficient current from the alternator to prevent the proper charging of the battery. In these circumstances, the battery potential can actually be depleted as the battery attempts to provide the additional required electrical current for the loads.

U.S. Patent No. 6,342,775 discloses a battery switching circuit that provides a mechanism by which a plurality of electrical storage batteries can be alternatively connected in parallel or series based on the position of a manually controlled joystick of a marine positioning and maneuvering system. When the joystick is in a neutral position in which no docking motion is demanded by the marine vessel operator, the storage batteries are connected in parallel so that they can benefit from charging by an alternator or generator associated with an internal combustion engine. If the joystick is moved out of its neutral position, the batteries are immediately connected in series to provide power to a plurality of electric motors that are used to drive a plurality of impellers of the docking system.

U.S. Patent No. 9,533,747 discloses a hybrid propulsion system that has an internal combustion engine and an electric motor that each selectively powers a marine propulsor to propel a marine vessel. A plurality of batteries discharges current to power the motor. A controller is programmed to aggregate the recharge and/or discharge limits of plurality of batteries and then operate the system according to a method that preferably prevents internal fault and disconnection of batteries in the plurality.

U.S. Patent No. 7,218,118 discloses a method for monitoring the condition of a battery of a marine propulsion system that provides the measuring of a voltage characteristic of the battery, comparing the voltage characteristic to a preselected threshold value, and evaluating the condition of the battery as a function of the relative magnitudes of the voltage characteristic and the threshold value. The voltage characteristic of the battery is measured subsequent to a connection event when a connection relationship between the battery and an electrical load is changed. The electrical load is typically a starter motor which is connected in torque transmitting relation with an internal combustion engine. The voltage characteristic is preferably measured at its minimum value during the inrush current episode immediately prior to cranking the internal combustion engine shaft to start the engine.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

The invention is defined by the independent claims. The dependent claims define advantageous embodiments.

One embodiment of the present disclosure generally relates to a power system configured to accommodate poor incoming power quality from an outside power source. The power system includes an incoming connection configured to receive power from the outside power source. A powered device is operatively connected to the incoming connection, where the powered device draws a current from the incoming connection. A control system detects an incoming voltage at the incoming connection and compares the incoming voltage to a threshold voltage. When the incoming voltage is less than the threshold voltage the current drawn from the incoming connection by the powered device is caused to be reduced. The incoming voltage being less than the threshold voltage is indicative of a poor incoming power quality.

Another embodiment generally relates to a method for operating a power system to accommodate poor incoming power quality from an outside power source. The method includes coupling an incoming connection operatively connected to the power system to the outside power source to receive power therefrom. The method further includes detecting an incoming voltage at the incoming connection from the outside power source and comparing the incoming voltage to a threshold voltage. The method further includes reducing the current drawn by a powered device operatively connected to the incoming connection when the incoming voltage is determined to be less than the threshold voltage. The incoming voltage being less than the threshold voltage is indicative of poor incoming power quality.

Another embodiment generally relates to a marine vessel configured to be powered by a battery as well as by an outside power source. The marine vessel includes an incoming connection connectable to the outside power source. A battery charger is configured to charge the battery from the outside power source, where the powered device draws a current from the incoming connection. A control system detects an incoming voltage at the incoming connection and compares the incoming voltage to a threshold voltage. When the incoming voltage is determined to be less than the threshold voltage, the battery charger is operated such that the current drawn from the incoming connection is reduced.

Various other features, objects and advantages of the disclosure will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 illustrates one example of a marine vessel including a power system according to the present disclosure.
Fig. 2 depicts an exemplary control system such as may be incorporated within the power system of Fig. 1 according to the present disclosure.
Figs. 3-4 are exemplary methods for operating power systems according to the present disclosure.

### DETAILED DESCRIPTION

In the present description, certain terms have been used for brevity, clarity, and understanding. No unnecessary limitations are to be implied therefrom beyond the requirement of the prior art because such terms are used for descriptive purposes only and are intended to be broadly construed. The different systems and methods described herein may be used alone or in combination with other systems and methods. Various equivalents, alternatives, and modifications are possible.

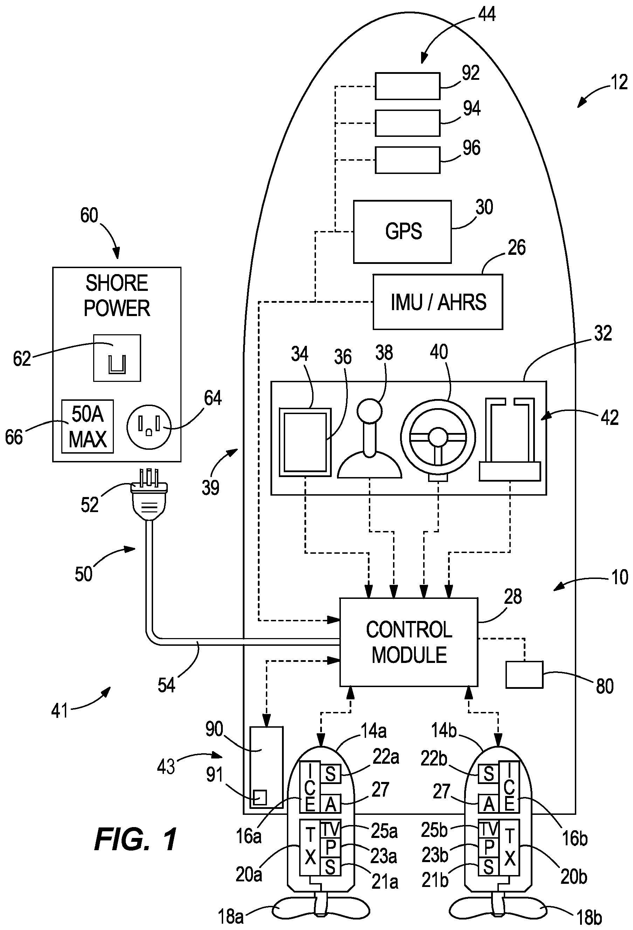

Fig. 1 illustrates a marine propulsion system 10 for a marine vessel 12. The marine propulsion system 10 includes two marine propulsion devices 14a, 14b, but one or more than two marine propulsion devices could instead be provided. The marine propulsion devices 14a, 14b shown herein are outboard motors, but the marine propulsion devices could instead be inboard motors, stern drives, pod drives, jet drives, etc. Each marine propulsion device 14a, 14b includes an engine 16a or 16b. The engines 16a, 16b shown here are internal combustion engines, which may be, for example, gasoline or diesel engines. Each marine propulsion device 14a, 14b also includes a propeller 18a or 18b configured to be coupled in torque-transmitting relationship with a respective engine 16a or 16b. Such torque-transmitting relationship is more specifically provided by way of a transmission 20a or 20b configured to transmit torque from a respective engine 16a or 16b to a respective propeller 18a or 18b. Each transmission 20a, 20b is configured to transmit torque from the engine 16a or 16b to the propeller 18a or 18b at one of at least a first gear ratio and a second gear ratio, although additional gear ratios such as, for example, third, fourth, fifth, etc. gear ratios could be provided. Alternatively, only a single forward gear ratio may be provided.

The marine propulsion system 10 further includes engine speed sensors 22a, 22b measuring a speed of a respective engine 16a, 16b. In one example, the engine speed sensors 22a, 22b may be shaft rotational speed sensors (e.g., tachometers), which measure a speed of the engine 16a or 16b in rotations per minute (RPM), as is known to those having ordinary skill in the art. The engine speed is also referenced to as a transmission input speed, as the input shaft of a transmission in certain embodiments is coupled to rotate directly therewith. Each transmission 20a, 20b includes a transmission output speed (TOS) sensor 21a, 21b that measures a transmission output speed of the respective transmission 20a, 20b in RPM. The TOS sensors 21a, 21b may be of a type similar to that of the engine speed sensors 22a, 22b. Clutch pressure sensors 23a, 23b are also provided in connection with the transmissions 20a, 20b. Clutch pressure sensors 23a, 23b can be pressure transducers in the hydraulic circuit(s) associated with the clutches of the transmissions 20a, 20b. Trolling valves 25a, 25b are also provided for each marine propulsion device 14a, 14b, and will be described further herein below.

The marine propulsion system 10 also includes a control module 28 in signal communication with the engines 16a, 16b and the transmissions 20a, 20b, as well as their associated sensors and valves and other components noted herein below. The control module 28 may also be configured to control the flow of power between components in the marine vessel 12. Among these components is a power system 90, which in certain embodiments includes batteries 91 and/or other energy storage systems in a manner known in the art. The power system 90 of certain embodiments also includes power management and protection circuitry, such as that discussed in the U.S. patents referenced in the Background section, for example.

In the exemplary embodiment of Fig. 1, an alternator 27 provided with the marine propulsion devices 14a, 14b generates power via rotation of the engines 16a, 16b in a manner known in the art. These alternators 27 generate and provide power to the power system 90, such as to charge the batteries 91or aid in powering any power consuming devices connected thereto.

The control module 28 is programmable and includes a processor and a memory. The control module 28 can be located anywhere in the marine propulsion system 10 and/or located remote from the marine propulsion system 10 and can communicate with various components of the marine vessel 12 via a peripheral interface and wired and/or wireless links, as will be explained further herein below. Although Fig. 1 shows one control module 28, the marine propulsion system 10 can include more than one control module. Portions of the method disclosed herein below can be carried out by a single control module or by several separate control modules. For example, the marine propulsion system 10 can have control modules located at or near a helm 32 of the marine vessel 12 and can also have control module(s) located at or near the marine propulsion devices 14a, 14b. If more than one control module is provided, each can control operation of a specific device or sub-system on the marine vessel.

In some examples, the control module 28 may include a computing system that includes a processing system, storage system, software, and input/output (I/O) interfaces for communicating with peripheral devices. The systems may be implemented in hardware and/or software that carries out a programmed set of instructions. As used herein, the term "control module" may refer to, be part of, or include an application specific integrated circuit (ASIC); an electronic circuit; a combinational logic circuit; a field programmable gate array (FPGA); a processor (shared, dedicated, or group) that executes code; other suitable components that provide the described functionality; or a combination of some or all of the above, such as in a system-on-chip (SoC). A control module may include memory (shared, dedicated, or group) that stores code executed by the processing system. The term "code" may include software, firmware, and/or microcode, and may refer to programs, routines, functions, classes, and/or objects. The term "shared" means that some or all code from multiple control modules may be executed using a single (shared) processor. In addition, some or all code from multiple control modules may be stored by a single (shared) memory. The term "group" means that some or all code from a single control module may be executed using a group of processors. In addition, some or all code from a single control module may be stored using a group of memories.

The control module 28 communicates with one or more components of the marine propulsion system 10 via the I/O interfaces and a communication link, which can be a wired or wireless link. In one example, the communication link is a controller area network (CAN) bus, but other types of links could be used. It should be noted that the extent of connections of the communication link shown herein is for schematic purposes only, and the communication link in fact provides communication between the control module 28 and each of the peripheral devices noted herein, although not every connection is shown in the drawing for purposes of clarity.

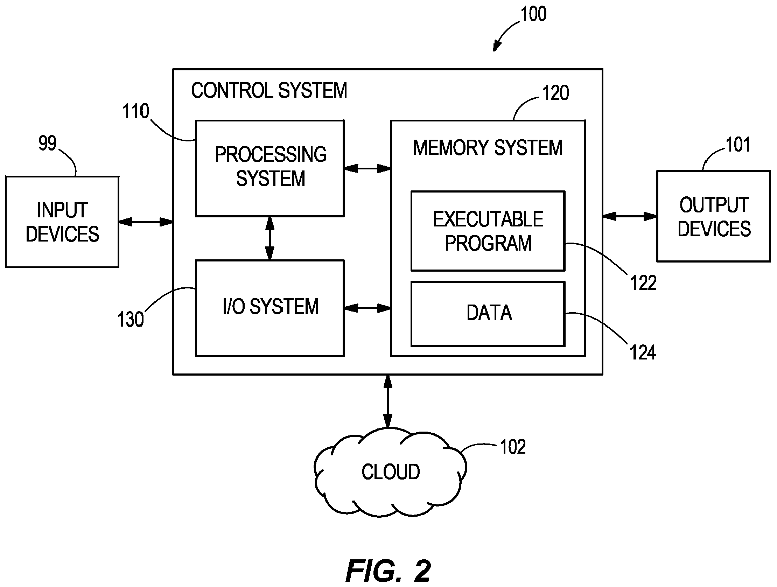

An exemplary control system 100 is shown in Fig. 2, which can be used as the control module 28 discussed above. Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system 100 communicates with each of the one or more components of the marine propulsion system 10 via a communication link CL, which can be any wired or wireless link. The control module 100 is capable of receiving information and/or controlling one or more operational characteristics of the marine propulsion system 10 and its various sub-systems by sending and receiving control signals via the communication links CL. In one example, the communication link CL is a controller area network (CAN) bus; however, other types of links could be used. It will be recognized that the extent of connections and the communication links CL may in fact be one or more shared connections, or links, among some or all of the components in the system 1. Moreover, the communication link CL lines are meant only to demonstrate that the various control elements are capable of communicating with one another, and do not represent actual wiring connections between the various elements, nor do they represent the only paths of communication between the elements. Additionally, the marine propulsion system 10 may incorporate various types of communication devices and systems, and thus the illustrated communication links CL may in fact represent various different types of wireless and/or wired data communication systems.

The control system 100 may be a computing system that includes a processing system 110, memory system 120, and input/output (I/O) system 130 for communicating with other devices, such as input devices 99 and output devices 101, either of which may also or alternatively be stored in a cloud 102. The processing system 110 loads and executes an executable program 122 from the memory system 120, accesses data 124 stored within the memory system 120, and directs the marine propulsion system 10 to operate as described in further detail below.

The processing system 110 may be implemented as a single microprocessor or other circuitry, or be distributed across multiple processing devices or sub-systems that cooperate to execute the executable program 122 from the memory system 120. Non-limiting examples of the processing system include general purpose central processing units, application specific processors, and logic devices.

The memory system 120 may comprise any storage media readable by the processing system 110 and capable of storing the executable program 122 and/or data 124. The memory system 120 may be implemented as a single storage device, or be distributed across multiple storage devices or sub-systems that cooperate to store computer readable instructions, data structures, program modules, or other data. The memory system 120 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

Returning to Fig. 1, the marine propulsion system 10 also includes a global positioning system (GPS) 30 that provides location and speed of the marine vessel 12 to the control module 28. Additionally or alternatively, a vessel speed sensor such as a Pitot tube or a paddle wheel could be provided. The marine propulsion system 10 may also include an inertial measurement unit (IMU) or an attitude and heading reference system (AHRS) 26. An IMU has a solid state, rate gyro electronic compass that indicates the vessel heading and solid state accelerometers and angular rate sensors that sense the vessel's attitude and rate of turn. An AHRS provides 3D orientation of the marine vessel 12 by integrating gyroscopic measurements, accelerometer data, and magnetometer data. The IMU/AHRS could be GPS-enabled, in which case a separate GPS 30 would not be required.

Further, the marine propulsion system 10 includes a number of operator input devices located at the helm 32 of the marine vessel 12. The operator input devices include a multi-functional display device 34 including a user interface 36. The user interface 36 may be an interactive, touch-capable display screen, a keypad, a display screen and keypad combination, a track ball and display screen combination, or any other type of user interface known to those having ordinary skill in the art for communicating with a multi-functional display device 34. A joystick 38 is also provided at the helm 32 and allows an operator of the marine vessel 12 to command the marine vessel 12 to translate or rotate in any number of directions. A steering wheel 40 is provided for providing steering commands to the marine propulsion devices 14a, 14b or to a rudder, in the event that the marine propulsion devices are not steerable. A throttle lever 42 is also provided for providing thrust commands, including both a magnitude and a direction of thrust, to the control module 28. Here, two throttle levers are shown, each of which can be used to control one of the marine propulsion devices 14a or 14b, although the two levers can be controlled together as a single lever. Alternatively, a single lever could be provided for controlling both marine propulsion devices 14a, 14b.

Several of the operator input devices at the helm 32 can be used to input an operator demand on the engines 16a, 16b to the control module 28, including the user interface 36 of the multi-functional display device 34, the joystick 38, and the throttle lever 42. By way of example, a rotation of the throttle lever 42 in a forward direction away from its neutral, detent position could be interpreted as a value from 0% to 100% operator demand corresponding via an input/output map, such as a look up table, to a position of the throttle valves of the engines 16a, 16b. For example, the input/output map might dictate that the throttle valves are fully closed when the throttle lever 42 is in the forward, detent position (i.e., 0% demand), and are fully open when the throttle lever 42 is pushed forward to its furthest extent (i.e., 100% demand).

The inventors have identified that with the advancement and integration of on-board technology for recreational vehicles, such as marine vessels, there is an increasing requirement for supplying power to support these loads. In the context of the marine vessel away from shore, this power supplied by on-board generators A (Fig. 1), the engines 16A, 16B via alternators 27, and/or batteries 90. While docked, this power supplied by shore power connections, particularly an incoming connection 50 comprised of a plug 52 and wire 54 that transmit power from a shore station 60 to a power system 41 aboard the marine vessel 12. In the example shown, the shore power station 60 includes a receptacle 64 configured to receive the plug 52 of the incoming connection 50 of the marine vessel 12, as well as a switch 62 for selectively providing power to the incoming connection 50. In certain examples, a maximum current label 66 is also provided with the shore power station 60, which indicates to the operator the maximum current that may be drawn from the shore power station 60 under nominal conditions.

However, the inventors have further observed that these shore power stations 60 and their connections are independent of the particular design of a given marine vessel 12, and further that it cannot be guaranteed that the shore power stations 60 are well-maintained. If the connections (also referred to as receptacles 64) are worn or poorly maintained, it can result in poor connections to the power system 41 aboard the marine vessel 12. Moreover, older marinas originally designed for boats having lower power consumption may be incapable of supplying the power required by newer boats. These inadequacies can result in the possibility of tripping breakers, shutting down devices due to low voltage (described below as powered devices 43 and additional devices 44, for example) or causing a thermal event, particularly at connection points between the devices and/or the incoming connection 50.

The inventors have identified that current systems in the art have the ability to limit the current drawn from the shore power stations 60, such as may be set in accordance with the maximum current label 66 provided therewith. This is set manually by the operator and it does not accommodate for poor incoming power quality as discussed above. Additionally, an operator must be trained on the operation of modifying this maximum current draw setting and be aware of the shore power station's 60 limitations in order to make adequate adjustments.

During operation of a marine vessel 12, circumstances arise in which power consumption exceeds the limitations of the shore power station 60 (whether the shore power station is operating at nominal performance, or having poor quality power output, for example). Under methods presently known in the art, the only course of action is for the operator to reduce the loads on the shore power station 60, or have an electrician upgrade the capacity of the shore power station 60 to meet this increased demand, often at a significant cost. The inventors have identified that with the ability to monitor the voltage and current produced at the receptacle 64 of a shore power station 60, and comparing these values with threshold data stored within the data 124 of the memory system 120 discussed above (Fig. 2), it would be possible to adjust the current drawn from the shore power station 60 automatically to account for the factors previously mentioned. For example, certain powered devices 43, such as a battery charger 91, can be operated at differing current draws corresponding to different charging rates for the batteries 90. Reducing the current drawn by the battery charger 91 thereby lightens the load on the shore power station 60, allowing for the incoming voltage at the incoming connection 50 thereto to stay above a voltage threshold in which devices on the marine vessel 12 can properly function. For example, the minimum threshold may be set at or above a minimum operating voltage corresponding to these powered devices 43 and additional powered devices 44, or a subset of devices referred to as "critical," which relates to the safety and comfort of the operator.

In certain embodiments alerts also be provided, such as an alert system 39 that incorporates the multi-functional display device 34 discussed above to notify the operator that a shore power station 60 connection is poor, and to advise the operator to inspect critical moments related to this transfer of power to the marine vessel 12. It will be recognized that other alert systems 39 may or alternatively be incorporated, such as independent displays, lights, and/or buzzers, for example.

As discussed above, exemplary devices operating on the marine vessel 12 as powered via the incoming connection 50 include one or more battery chargers 91, an air conditioning (A/C) system 92, a water heater 94, and a refrigerator 96. Other devices consuming power on a marine vessel 12 are also known in the art.

Figure 1 depicts a power system 41 configured to accommodate this poor incoming power quality from an outside power source, such as a shore power station 60, according to the present disclosure. As discussed above, the incoming connection 50 is configured to receive power from the outside power source, particularly by coupling the plug 52 of the incoming connection 50 with the receptacle 64 of the shore power station 60. A powered device, shown here as a battery charger 91, is operably connected to the incoming connection 50 and draws a current from the incoming connection 50 during operation. A control system, also referred to as a control module 28, is configured to detect an incoming voltage at the incoming connection 50, such as in a conventional manner presently known in the art. The control module 28 is further configured to then compare this incoming voltage at the incoming connection 50 to a threshold voltage that is stored within the data 124 of the memory system 120 (see Fig. 2). In certain examples, this threshold voltage is set to be at or above a minimum operating voltage, for example corresponding specifically to the powered device 43, which may also be store in the data 124. When the incoming voltage is determined to be less than the threshold voltage, the current drawn from the incoming connection 50 by the powered device 43 is therefore caused to be reduced in recognition of this poor incoming power quality received from the shore power station 60. It will be recognized that the powered device 43 presently disclosed is not limited to that of a battery charger 91. However, the inventors have identified that the battery charger 91 in certain examples may comprise up to 50% of the overall current drawn from the shore power station 60, and therefore provides effective relief while nonetheless serving its function of charging one or more batteries 90.

By reducing the current drawn from the shore power station 60 by adjusting the current drawn from the battery charger 91, additional power remains available for operating additional powered devices 44, such as an A/C system 92, water heater 94, and/or refrigerator 96, for example. In certain examples, one or more of the additional powered devices 44 may also be adjusted to have a lower current drawn from the shore power station 60 in the same manner previously discussed for the battery charger 91, whereby these collective devices may be reduced in a particular sequence until the incoming voltage at the incoming connection 50 is determined to meet or exceed the threshold voltage required. In certain examples, this threshold voltage is approximately 105 volts.

In certain embodiments, adjustments to the power consumption may be step-wise in increments between 5-100% reduced until the incoming voltage at the incoming connection 50 is determined to meet or exceed the threshold voltage required. Further adjustments may be made at a periodic rate, in real-time based on the incoming voltage, and/or other time intervals and step changes (e.g., increments of 5%, other rates, or calculated reductions).

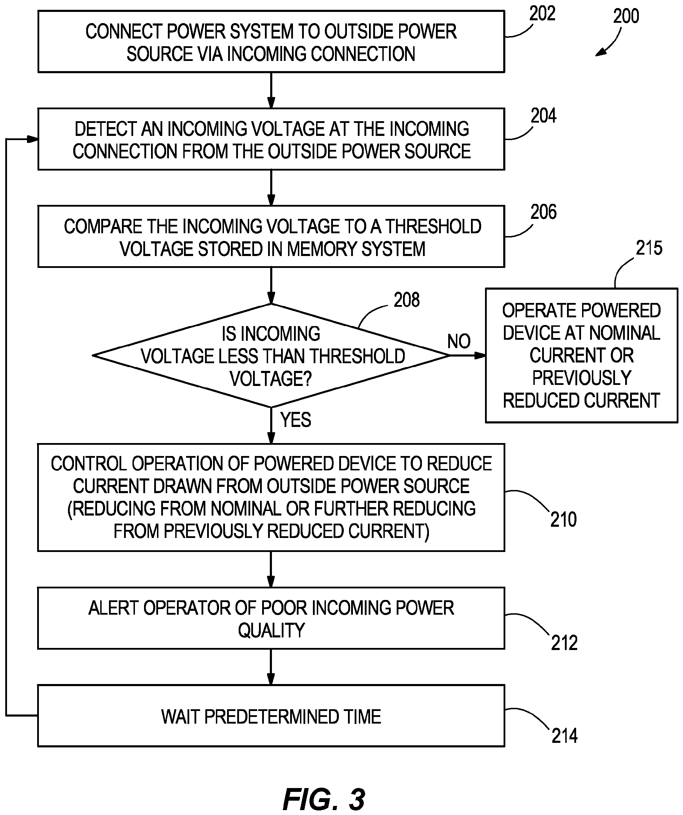

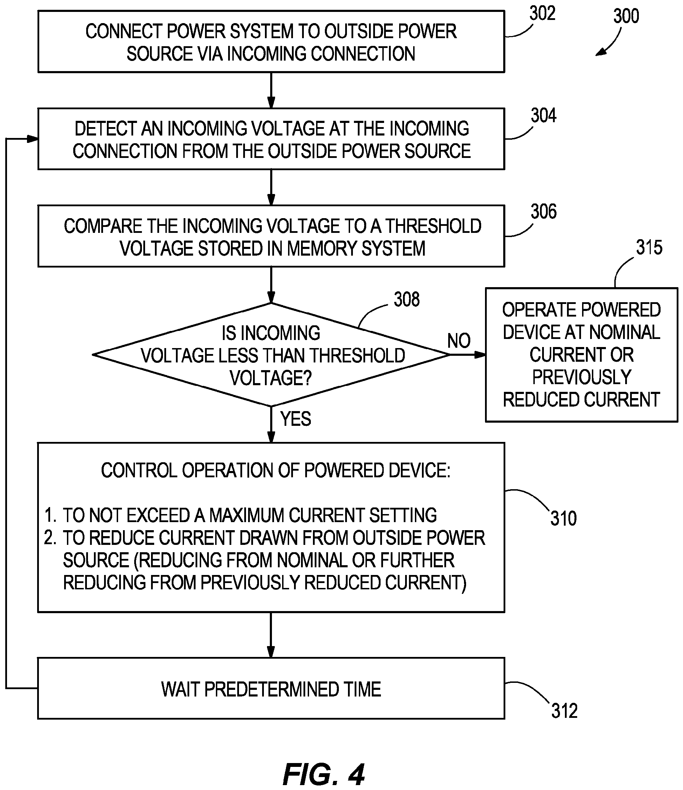

Figures 3 and 4 depict exemplary methods 200 and 300 for operating a power system to accommodate poor incoming power quality from an outside power source. In particular, the method 200 begins with connecting a power system to an outside power source via an incoming connection in step 202, and then detecting an incoming voltage at the incoming connection from that outside power source in step 204. The incoming voltage is then compared in step 206 to a threshold voltage stored in the memory system. If it is determined in step 208 that the incoming voltage is less than the threshold voltage, operation of a powered device is controlled to reduce the current drawn therefrom from the outside power source in step 210. This reduction in current drawn by the powered device may be a reduction from a nominal current value, or a further reduction from a previously reduced current if the incoming voltage remains less than the threshold voltage as determined in step 208. In step 212, an operator is further alerted of this poor incoming power quality, which allows the operator to investigate the source of the problem, and/or to manually reduce the current load on the outside power source. In certain examples, the method 200 then provides for waiting a predetermined time in step 214 before returning to step 204, whereby the process continues.

If alternatively it is determined in step 208 that the incoming voltage is less than the threshold voltage, the powered device may be operated in step 216 at a nominal current, or at a previously reduced current that has been determined to allow the incoming voltage to meet or exceed the threshold voltage of step 208.

An alternative method 300 is provided in Figure 4. In general, steps 302, 304, 308 and 315 generally correspond to the steps 202-208 and 215 previously discussed, respectively. However, in the method 300 of Figure 4, if it is determined in step 308 that the incoming voltage is less than threshold voltage, the powered device is controlled to operate in step 310 such that (1) the powered device does not exceed a maximum current setting, which may be imposed as discussed above so as to not exceed the maximum current label 66 provided with the shore power station 60, and (2) to reduce the current drawn from the outside power source, either from a nominal or a previously reduced current. The method 300 then includes waiting a predetermined time in step 312 before returning to step 304, similar to that previously discussed with respect to the method 200 of Figure 3.

An additional exemplary method for operating a power is now provided. When an incoming voltage at the incoming connection 50 drops below a set limit in the configuration, an under voltage limit and/or hysteresis limit, such as the threshold voltage as discussed, the power provided to the battery charger 91 is reduced until that incoming voltage once again exceeds the threshold voltage. An example of an under voltage limit (threshold voltage) set to 105 volts, with a hysteresis limit set to 3 volts, a battery charger 91 is determined to be pulling 10 amps from the shore power station 60, causing the incoming voltage at the incoming connection 50 to drop to 102 volts. The battery charger 91 then reduces the current drawn from the shore power station 60 at a pre-configured ramp (e.g., steps of 10% of nominal current, 5% of previous actual current draw, and/or through use of a lookup table stored in data 124 until the incoming voltage is determined to be greater than 105 volts. In contrast, if the battery charger 91 is determined to be pulling 10 amps from shore power station 60, and the incoming voltage rises to 108 volts, the battery charger 91 may then increase its current draw from the shore power station 60 until either the incoming voltage drops again below the 105 volt threshold voltage, or until the battery charger 91 reaches a maximum current setting, as discussed above.

The automatic adjustment of current draws from one or more powered devices, such as battery chargers provides for intelligent charging and reduces the need for an operator to be present and aware of the incoming power quality of an outside power source. Because the current draw is adjusted automatically, the marine vessel 12 is now configured to ensure operations continue, while also recharging the batteries 90 without the operator's intervention at the dock, and notwithstanding these poor incoming power quality issues. In other words, simply providing a low voltage alert to the operator may be insufficient, as the operator is not always present, and as the incoming voltage at the incoming connection 50 may vary depending on the volume of other marine vessels 12 drawing current from the shore power station 60 at any given point in time.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. Certain terms have been used for brevity, clarity, and understanding. No unnecessary limitations are to be inferred therefrom beyond the requirement of the prior art because such terms are used for descriptive purposes only and are intended to be broadly construed. The patentable scope of the invention is defined by the claims and may include other examples that occur to those skilled in the art. Such other examples are intended to be within the scope of the claims if they have features or structural elements that do not differ from the literal language of the claims, or if they include equivalent features or structural elements with insubstantial differences from the literal languages of the claims.

## Claims

1. A power system (41) configured to accommodate poor incoming power quality from an outside power source (60), the power system (41) comprising:
an incoming connection (50) configured to receive power from the outside power source (60);
a powered device (43) operatively connected to the incoming connection (50), wherein the powered device (43) draws a current from the incoming connection (50); and
a control system (100) that detects an incoming voltage at the incoming connection (50) and compares the incoming voltage to a threshold voltage, wherein when the incoming voltage is less than the threshold voltage the current drawn from the incoming connection (50) by the powered device (43) is caused to be reduced;
wherein the incoming voltage being less than the threshold voltage is indicative of a poor incoming power quality.

2. The power system (41) according to claim 1, wherein the powered device (43) is a battery charger (91) configured to charge one or more batteries (90).

3. The power system (41) according to claim 1, wherein the outside power source (60) is a shore power station.

4. The power system (41) according to claim 1, wherein the power system (41) further comprises another powered device (44) that also draws a current from the incoming connection (50), preferably wherein the another powered device (44) has a predetermined minimum operating voltage, and wherein the threshold voltage is set at least as high as the predetermined minimum operating voltage, or preferably wherein the threshold voltage is approximately 105 volts, or preferably wherein the another powered device (44) is an air conditioning system (92).

5. The power system (41) according to claim 1, wherein the power system (41) further comprises another powered device (44) that also draws a current from the incoming connection (50) and that has a predetermined minimum operating voltage, wherein the powered device (43) and the another powered device (44) together constitute multiple devices, and wherein the control system (100) is configured to set a current maximum for at least one of the multiple devices to limit the current drawn thereby.

6. The power system (41) according to claim 1, wherein the control system (100) is configured to set a current maximum to limit the current drawn from the incoming connection (50).

7. The power system (41) according to claim 1, wherein the control system (100) comprises a lookup table based at least in part on the incoming voltage, and wherein the current drawn from the incoming connection (50) by the powered device (43) is caused to be reduced in accordance with the lookup table.

8. The power system (41) according to claim 1, wherein the control system (100) is further operatively connected to an alert system (39) for alerting an operator, wherein the control system (100) sends a signal for the alert system (39) when the incoming voltage is determined to be below the threshold voltage.

9. The power system (41) according to claim 1, wherein the control system (100) is configured to reduce the current drawn from the incoming connection (50) by the powered device (43) across a range of reduced currents.

10. The power system (41) according to claim 9, wherein the range of reduction in the current drawn by the powered device (43) is between 5% and 100%.

11. The power system (41) according to claim 1, wherein the control system (100) is configured to compare the incoming voltage to the threshold voltage at a periodic rate.

12. A method (200) for operating a power system (41) to accommodate poor incoming power quality from an outside power source (60), the method (200) comprising:
coupling (202) an incoming connection (50) operatively connected to the power system (41) to the outside power source (60) to receive power therefrom;
detecting (204) an incoming voltage at the incoming connection (50) from the outside power source (60);
comparing (208) the incoming voltage to a threshold voltage; and
reducing (210) the current drawn by a powered device (43) operatively connected to the incoming connection (50) when the incoming voltage is determined to be less than the threshold voltage.
wherein the incoming voltage being less than the threshold voltage is indicative of poor incoming power quality.

13. The method (200) according to claim 12, wherein another powered device (44) is also operatively connected to the incoming connection (50) and also draws a current therefrom, preferably wherein the another powered device (44) has a predetermined minimum operating voltage, further comprising selecting the threshold voltage to be at least as high as the predetermined minimum operating voltage, or preferably wherein the powered device (43) and the another powered device (44) together constitute multiple devices, further comprising also setting a current maximum and limiting the current drawn by the at least one of the multiple devices to not exceed the current maximum.

14. The method (200) according to claim 12, further comprising operatively connecting the power system (41) to an alert system (39) for alerting an operator, and further comprising sending a signal for the alert system (39) to alert the operator when the incoming voltage is determined to be below the threshold voltage.

15. A marine vessel (12) configured to be powered by a battery (90) as well as by an outside power source (60), the marine vessel (12) comprising:
an incoming connection (50) connectable to the outside power source (60);
a battery charger (91) configured to charge the battery (90) from the outside power source (60), wherein the powered device (43) draws a current from the incoming connection (50); and
a control system (100) that detects an incoming voltage at the incoming connection (50) and compares the incoming voltage to a threshold voltage, wherein when the incoming voltage is determined to be less than the threshold voltage the battery charger (91) is operated such that the current drawn from the incoming connection (50) is reduced.
